# EUROPÄISCHE PATENTSCHRIFT

(11) **EP 0 899 135 B1**
(45) Veröffentlichungstag und Bekanntmachung des Hinweises auf die Patenterteilung: **18.09.2002**
(21) Anmeldenummer: 98113466.1
(22) Anmeldetag: 20.07.1998
(51) Int. Cl.: B60H 1/32

(54) **Verfahren und Vorrichtung zur verdampfervereisungsgeschützten Klimaanlagensteuerung**
Method and apparatus for controlling the air-conditioning to prevent the freezing of the evaporator
Méthode et appareil pour contrôler la climatisation pour prévenir le givrage de l'évaporateur

(30) Priorität: 23.08.1997 DE 19736818
(43) Veröffentlichungstag der Anmeldung: 03.03.1999
(73) Patentinhaber: Behr GmbH & Co., 70469 Stuttgart (DE)
(72) Erfinder: Lochmahr, Karl, 71665 Vaihingen-Horrheim (DE); Baruschke, Wilhelm, 73117 Wangen (DE); Raimann, Joachim, 70469 Stuttgart (DE); Kies, Matthias, 71711 Steinheim (DE)
(74) Vertreter: Patentanwälte Ruff, Wilhelm, Beier, Dauster & Partner

(56) Entgegenhaltungen:
- EP-A- 0 557 747
- DE-A- 19 507 667
- US-A- 5 218 836

## Beschreibung

Die Erfindung bezieht sich auf ein Verfahren und eine Vorrichtung zur verdampfervereisungsgeschützen Steuerung einer Klimaanlage nach dem Oberbegriff des Anspruchs 1 bzw. 3.

Derartige Verfahren und Vorrichtungen werden insbesondere in Kraftfahrzeugen verwendet. Durch die Deaktivierung des Kompressors bei zu niedriger Verdampfertemperatur, d.h. wenn diese eine vorgegebene Abschalttemperatur unterschreitet, werden Vereisungserscheinungen am Verdampfer verhindert. Der Kompressor wird dann wieder aktiviert, wenn die Verdampfertemperatur eine vorgegebene Anschalttemperatur überschreitet, die größer als die Abschalttemperatur gewählt ist. Dadurch wird eine erwünschte Einschalthysterese bereitgestellt, die vor zu häufigen Ab-und Anschaltvorgängen des Kompressors durch den Vereisungsschutz schützt.

Aus der Offenlegungsschrift DE 195 07 667 A1 ist es für ein Verfahren und eine Vorrichtung dieser Art bekannt, die Abschalttemperatur dynamisch in Abhängigkeit von der Leistung eines dem Verdampfer zugeordneten Gebläses und/oder von der Temperatur der vom Verdampfergebläse angesaugten Luft mit steigender Gebläseleistung bzw. steigender Ansauglufttemperatur fallend vorzugeben. Außerdem wird dort vorgeschlagen, die Einschalthysterese mit höherer Gebläseleistung und/oder höherer Ansauglufttemperatur konstant oder kleiner werdend vorzugeben. Mit einer solchen dynamischen Anpassung der Abschalttemperatur und optional auch der Anschalttemperatur läßt sich das Leistungspotential der Klimaanlage besser ausschöpfen als bei fest vorgegebener Abschalttemperatur. Denn in letzterem Fall muß selbige so hoch gewählt werden, daß eine Verdampfervereisung auch in kritischen Betriebspunkten der Anlage mit Sicherheit vermieden wird, was bei vielen anderen, weniger kritischen Betriebszuständen zu einer unnötig frühen Kompressorabschaltung führt.

Ein weiteres Verfahren und eine weitere Vorrichtung der eingangs genannten Art mit dynamischem Vereisungsschutz sind in der Offenlegungsschrift EP 0 557 747 A2 beschrieben. Als relevante Meßgröße für den dortigen dynamischen Vereisungsschutz dient der Saugdruck des Kompressors bzw. dessen Anstiegsrate nach einer jeweiligen Kompressordeaktivierung, die dort im Ausrücken einer elektrisch ansteuerbaren Kupplung besteht, über die der Kompressor mechanisch mit dem Antriebsmotor eines Kraftfahrzeugs gekoppelt ist. Der Kompressorsaugdruck entspricht dabei dem Kältemitteldruck am Verdampferausgang. Der Kompressor wird deaktiviert, wenn der Saugdruck unter einen vorgegebenen Abschaltdruck fällt, und wieder aktiviert, wenn der Saugdruck über einen vorgegebenen Anschaltdruck ansteigt, der größer als der Abschaltdruck ist. Gleichzeitig wird die Zeitdauer vom Abschaltzeitpunkt bis zum Wiederanschalten des Kompressors gemessen. Der Abschaltdruck wird dann als Funktion dieser gemessenen Zeitdauer variabel aktualisiert, wobei er umso kleiner gewählt wird, je größer diese gemessene Zeitdauer ist.

Ein ähnliches Verfahren und eine Vorrichtung welche statt eines Druckes eine Temperatur messen, sind offenbart in US 5 218 836

Der Erfindung liegt als technisches Problem die Bereitstellung eines Verfahrens und einer Vorrichtung der eingangs genannten Art zugrunde, bei denen auf vergleichsweise einfache Weise eine Verdampfervereisung zuverlässig verhindert und das Leistungspotential der Klimaanlage möglichst gut ausgenutzt wird.

Die Erfindung löst dieses Problem durch die Bereitstellung eines Verfahrens mit den Merkmalen des Anspruchs 1 sowie einer Vorrichtung mit den Merkmalen des Anspruchs 3.

Beim Verfahren nach Anspruch 1 wird laufend die Verdampfertemperatur erfaßt und daraus der Verdampfertemperaturgradient während Betriebsphasen mit deaktiviertem und/oder aktiviertem Kompressor ermittelt. Der Kompressor wird deaktiviert, wenn die Verdampfertemperatur unter eine Abschalttemperatur absinkt, die in Abhängigkeit vom ermittelten Verdampfertemperaturgradient variabel vorgegeben wird. Speziell wird die Abschalttemperatur bei Heranziehung des Verdampfertemperaturverlaufs während Betriebsphasen mit aktiviertem Kompressor, während denen der Verdampfertemperaturgradient negativ ist, mit betraglich anwachsendem Verdampfertemperaturgradient ansteigend gewählt. Hingegen wird sie bei Heranziehung des Verdampfertemperaturverlaufs während Betriebsphasen mit deaktiviertem Kompressor, während denen der Verdampfertemperaturgradient positiv ist, mit sinkendem Verdampfertemperaturgradient ansteigend gewählt. Durch diese Vorgehensweise wird eine echte Verdampfertemperaturregelung hinsichtlich dynamischem Verdampfervereisungsschutz realisiert, da der Verdampfertemperaturverlauf zur Bestimmung der jeweils optimalen Kompressorabschalttemperatur rückgekoppelt wird. Die Vorrichtung nach Anspruch 3 eignet sich zur Durchführung dieses Verfahrens, wozu insbesondere die entsprechende Steuereinheit geeignet ausgelegt ist.

Durch die Verwendung der Verdampfertemperatur als relevante Meßgröße läßt sich vergleichsweise einfach eine dynamische Vereisungsschutzregelung realisieren. Insbesondere ist die Erfassung des Verdampfertemperaturgradients bei gegebener, geforderter Genauigkeit der Vereisungsschutzmaßnahme einfacher als z.B. eine Erfassung der Änderungsrate des Kompressorsaugdrucks. Von weiterem Vorteil ist die Option, zur Einstellung der Abschalttemperatur auch den Verdampfertemperaturgradient während den aktiven Kompressorbetriebsphasen heranziehen zu können, und zwar entweder allein oder in Verbindung mit einer zusätzlichen Auswertung desselben während der Deaktivierungsphasen des Kompressors. Durch die Verwendung beider Informationen kann bei Bedarf eine Redundanz oder eine erhöhte Genauigkeit bereitgestellt werden.

Bei einem nach Anspruch 2 weitergebildeten Verfahren wird die Einschalthysterese, d.h. der Abstand der Anschalttemperatur von der Abschalttemperatur, ebenfalls in Abhängigkeit vom ermittelten Verdampfertemperaturgradient variabel derart vorgegeben, daß er mit betraglich anwachsendem negativem Verdampfertemperaturgradient bzw. sinkendem positivem Verdampfertemperaturgradient ansteigt, wie dies auch für die Abschalttemperatur gilt. Bei langsam abfallender Verdampfertemperatur während einer Kompressoraktivierungsphase können daher die Abschalttemperatur abgesenkt und die Einschalthysterese klein gewählt werden, ohne daß Vereisungsgefahr für den Verdampfer besteht. Hingegen wird bei schnell abfallender Verdampfertemperatur während aktiviertem Kompressor, was einem Fall geringer Klimaanlagenlast entspricht, eine ausreichend hohe Abschalttemperatur mit größerer Einschalthysterese eingestellt, um auch dann eine Verdampfervereisung zu verhindern.

Vorteilhafte Ausführungsformen der Erfindung werden nachfolgend unter Bezugnahme auf die Zeichnungen beschrieben. Hierbei zeigen:
- Fig. 1: ein Blockschaltbild einer Vorrichtung zur verdampfervereisungsgeschützten Steuerung einer Klimaanlage,
- Fig. 2: ein Diagramm der Verdampfertemperatur in Abhängigkeit von der Zeit zur Veranschaulichung einer mit der Vorrichtung von Fig. 1 realisierbaren dynamischen Vereisungsschutzregelung bei hoher Anlagenlast und
- Fig. 3: ein Diagramm entsprechend Fig. 2, jedoch für einen Betriebsfall bei niedriger Anlagenlast.

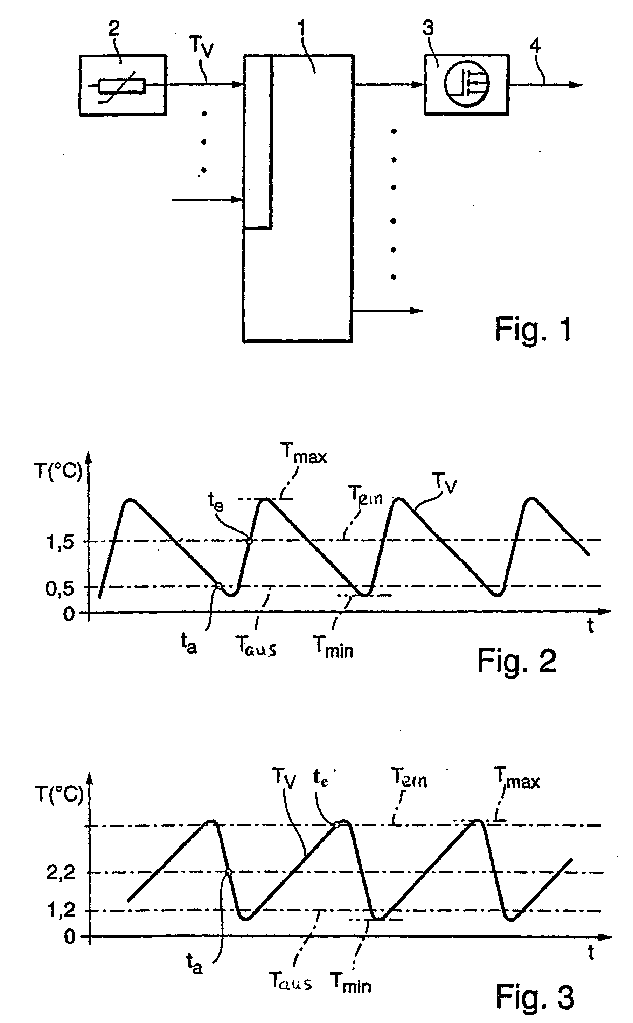

Die in Fig. 1 gezeigte Vorrichtung zur verdampfervereisungsgeschützten Steuerung einer beispielsweise in einem Kraftfahrzeug eingebauten Klimaanlage beinhaltet als zentrales Element eine Steuereinheit 1, z.B. in Form eines Mikrocomputers. Des weiteren beinhaltet die Vorrichtung einen Sensor 2 zur Messung der Verdampfertemperatur Tᵥ, dessen Ausgangssignal der Steuerheit 1 zugeführt wird. Weiterhin ist ein Halbleiterleistungsschalter 3 vorgesehen, der von der Steuereinheit 1 über einen entsprechenden Ausgang derselben angesteuert wird. Mit dem Stromsignal 4 des Leistungsschalters 3 wird eine Magnetkupplung angesteuert, über die ein Kompressor aktiviert und deaktiviert wird, der ebenso wie ein Verdampfer und weitere übliche Komponenten Teil eines Kältemittelkreislaufs der herkömmlich aufgebauten Klimaanlage ist. Die Steuereinheit 1 dient vorzugsweise auch zur Steuerung bzw. Regelung der weiteren, hier nicht näher interessierenden Klimaanlagenfunktionen und besitzt dazu entsprechende weitere, nicht näher bezeichnete Signaleingänge und Signalausgänge.

Die Steuereinheit 1 steuert somit über den Leistungsschalter 3 und die von diesem geschaltete Magnetkupplung den Betrieb des Kompressors. Dabei sind zum Schutz des Verdampfers vor Vereisung spezielle, nachfolgend näher erläuterte Maßnahmen vorgesehen, während die Kompressorbetriebssteuerung ansonsten in einer herkömmlichen Weise erfolgt. Für diesen Verdampfervereisungsschutz deaktiviert die Steuereinheit 1 den Kompressor über den Halbleiterschalter 3 und die Magnetkupplung immer dann, wenn die vom Verdampfertemperatursensor 2 gemessene Verdampfertemperatur Tᵥ eine vorgegebene, in der Steuereinheit 1 abgespeicherte Abschalttemperatur Tₐᵤₛ unterschreitet. Erst wenn die Verdampfertemperatur Tᵥ anschließend wieder eine vorgegebene, ebenfalls in der Steuereinheit 1 abgelegte Anschalttemperatur Tₑᵢₙ überschritten hat, aktiviert die Steuereinheit 1 den Kompressor wieder durch entsprechende Ansteuerung des Halbleiterschalters 3 und damit der Magnetkupplung des Kompressors. Die Anschalttemperatur Tₑᵢₙ ist um eine Einschalthysterese T_{H}=Tₑᵢₙ-Tₐᵤₛ ≥ 0 größer gewählt als die Abschalttemperatur Tₐᵤₛ. Damit werden zu häufige Ein- und Ausschaltvorgänge für den Kompressor verhindert.

Nach Deaktivieren des Kompressors sinkt die Verdampfertemperatur Tᵥ noch weiter bis zu einem Temperaturminimum Tₘᵢₙ ab, bevor sie dann aufgrund der deaktivierten Klimaanlage ansteigt. Analog steigt beim Wiederanschalten des Kompressors die Verdampfertemperatur Tᵥ noch weiter bis zu einem Temperaturmaximum Tₘₐₓ an, bevor sie dann durch die Wirkung der aktivierten Klimaanlage absinkt. Naturgemäß liegt dabei das Temperaturminimum Tₘᵢₙ bei niedriger Klimaanlagenbelastung weiter unterhalb der Abschalttemperatur Tₐᵤₛ als bei hoher Anlagenbelastung, während umgekehrt das Temperaturmaximum Tₘₐₓ bei hoher Anlagenbelastung weiter oberhalb der Anschalttemperatur Tₑᵢₙ liegt als bei niedriger Anlagenbelastung. Wenn die Abschalttemperatur Tₐᵤₛ fest vorgegeben würde, müßte sie daher in einem relativ großen Abstand zum Punkt drohender Verdampfervereisung vorgegeben werden, um sicherzustellen, daß auch bei ganz niedriger Anlagenlast das von der Verdampfertemperatur Tᵥ nach jeweiligen Deaktivieren des Kompressors erreichte Temperaturminimum Tₘᵢₙ oberhalb der Vereisungsgrenze liegt. Für Betriebsfälle mit hoher Anlagenlast, in denen das Temperaturminimum Tₘᵢₙ der Verdampfertemperatur Tᵥ nur wenig unterhalb der Abschalttemperatur Tₐᵤₛ liegt, ist hingegen ein solch großer Abstand der Abschalttemperatur Tₐᵤₛ vom Vereisungspunkt eigentlich nicht erforderlich, mit der Folge, daß bei fixiert vorgegebener Abschalttemperatur in diesen Betriebsfällen die Leistungsfähigkeit der Klimaanlage nicht voll ausgenutzt wird.

Deswegen ist eine dynamische Vereisungsschutzregelung mit entsprechender Anpassung der Abschalttemperatur Tₐᵤₛ von Vorteil, wie sie vorliegend von der Steuereinheit 1 bewirkt wird. In den Figuren 2 und 3 sind zwei typische Betriebsphasen mit dieser dynamischen Vereisungsschutzregelung veranschaulicht, und zwar in Fig. 2 ein Fall hoher Anlagenlast und in Fig. 3 ein Fall niedriger Anlagenlast. In beiden Fällen nimmt die Verdampfertemperatur Tᵥ entsprechend dem periodischen Aktivieren und Deaktivieren des Kompressors periodisch ab bzw. zu, wobei im Fall von Fig. 2 durch die hohe Anlagenbelastung die Verdampfertemperatur Tᵥ während den Betriebsphasen mit deaktiviertem Kompressor jeweils vergleichsweise rasch ansteigt und während den aktiven Kompressorbetriebsphasen nur relativ langsam absinkt. Umgekehrt steigt die Verdampfertemperatur Tᵥ im Fall von Fig. 3 wegen der geringen Anlagenbelastung während deaktiviertem Kompressor nur relativ langsam an und fällt während aktiviertem Kompressor vergleichsweise rasch ab.

Für den Betriebsfall hoher Last gemäß Fig. 2 folgt, deß die Verdampfertemperatur Tᵥ nach Abschalten des Kompressors vor ihrem Ansteigen nur noch sehr geringfügig bis zur Minimaltemperatur Tₘᵢₙ abfällt, d.h. die Minimaltemperatur Tₘᵢₙ liegt relativ dicht unterhalb der Abschalttemperatur Tₐᵤₛ. Dies nutzt die Erfindung dahingehend aus, daß die Abschalttemperatur Tₐᵤₛ in diesem Fall so gelegt werden kann, daß sie nur einen verhältnismäßig geringen Abstand zum Vereisungspunkt einhält. Im Beispiel von Fig. 2 wird die Abschalttemperatur Tₐᵤₛ auf nur 0,5°C gelegt. Da die Minimaltemperatur Tₘᵢₙ die Abschalttemperatur Tₐᵤₛ allenfalls um 0,1°C bis 0,2°C unterschreitet, besteht keine Vereisungsgefahr. Gleichzeitig kann das Leistungsvermögen der Anlage voll ausgenutzt werden. Die Anschalttemperatur Tₑᵢₙ ist beispielhaft auf 1,5°C festgelegt, d.h. die Einschalthystere beträgt 1°C. Wegen der hohen Anlagenlast schwingt die Verdampfertemperatur Tᵥ nach dem Aktivieren des Kompressors zum jeweiligen Abschaltzeitpunkt tₑ noch merklich über die Anschalttemperatur Tₑᵢₙ hinaus, bis sich die Kühlleistung der Anlage durchsetzt. Dies bedeutet, daß die Maximaltemperatur Tₘₐₓ merklich über der Anschalttemperatur Tₑᵢₙ liegt, so daß es günstig ist, die Einschalthysterese vergleichsweise gering zu halten, wenn größere Schwankungen der Verdampfertemperatur Tᵥ vermieden werden sollen.

Für den Fall niedriger Anlagenlast nimmt hingegen die Verdampfertemperatur Tᵥ, wie aus Fig. 3 ersichtlich, nach Kompressorabschaltung zu einem jeweiligen Abschaltzeitpunkt tₐ noch merklich ab, so daß hier die Minimaltemperatur Tₘᵢₙ weiter unter der für diesen Betriebsfall gewählten Abschalttemperatur Tₐᵤₛ liegt, im Fall von Fig. 3 z.B. um etwa 0,8°C tiefer. Um auch hier jeglicher Gefahr einer Verdampfervereisung zu begegnen, ist die Abschalttemperatur Tₐᵤₛ dementsprechend hoch zu wählen, z.B. im Fall von Fig. 3 zu 1,2°C. Im Beispiel von Fig. 3 wurde dieselbe Einschalthysterese von 1°C wie im Fall von Fig. 2 beibehalten, so daß die Anschalttemperatur Tₑᵢₙ bei 2,2°C liegt. Wegen der niedrigen Anlagenlast schwingt die Verdampfertemperatur Tᵥ beim jeweiligen Einschalten des Kompressors zum Anschaltzeitpunkt tₑ nur wenig über die Anschalttemperatur Tₑᵢₙ hinaus, um dann relativ rasch abzusinken, d.h. die Maximaltemperatur Tₘₐₓ liegt in diesem Fall nur wenig, z.B. um 0,1°C bis 0,2°C, über der Anschalttemperatur Tₑᵢₙ.

Wie aus den Figuren 2 und 3 erkennbar, ist die Anstiegsrate der Verdampfertemperatur Tᵥ während Betriebsphasen mit deaktiviertem Kompressor ebenso wie ihre Absinkrate während aktiviertem Kompressor ein eindeutiges Maß für die momentane Anlagenbelastung und damit für das Maß, um das die Minimaltemperatur Tₘᵢₙ unter der Abschalttemperatur Tₐᵤₛ liegt. Die Erfindung nutzt diese Tatsache dazu, die Abschalttemperatur Tₐᵤₛ situationsgerecht dynamisch variabel einzustellen. Dazu wertet die Steuereinheit 1 die vom Verdampfertemperatursensor 2 kontinuierlich zugeführte Information über die Verdampfertemperatur Tᵥ dahingehend aus, daß sie den Verdampfertemperaturgradient dTᵥ/dt des zeitlichen Verlaufs der Verdampfertemperatur Tᵥ ermittelt, und zwar während Betriebsphasen mit deaktiviertem Kompressor und/oder während solcher mit aktiviertem Kompressor. Dann stellt sie die Abschalttemperatur Tₐᵤₛ in Abhängigkeit vom ermittelten Verdampfertemperaturgradient dTᵥ/dt ein, und zwar nach einer funktionalen Beziehung, die beinhaltet, daß die Abschalttemperatur Tₐᵤₛ um so höher gewählt wird, je geringer der positive Verdampfertemperaturgradient dTᵥ/dt während Betriebsphasen mit deaktiviertem Kompressor ist und/oder je betraglich größer der negative Verdampfertemperaturgradient dTᵥ/dt während Betriebsphasen mit aktiviertem Kompressor ist. Der genaue funktionale Zusammenhang zwischen Abschalttemperatur Tₐᵤₛ und Verdampfertemperaturgradient dTᵥ/dt ist dann unter Beachtung dieser Bedingung auf den jeweiligen Anwendungsfall abzustimmen, z.B. durch empirische Versuche vor Ingebrauchnahme der Anlage.

Alternativ zu der Vorgehensweise gemäß Figuren 2 und 3, bei der eine konstant bleibende Einschalthysterese T_{H}=Tₑᵢₙ-Tₐᵤₛ vorgesehen ist, ist es möglich, auch die Einschalthysterese T_{H} in Abhängigkeit vom während Betriebsphasen mit deaktiviertem und/oder aktiviertem Kompressor erfaßten Verdampfertemperaturgradient dTᵥ/dt variabel vorzugeben. Bevorzugt wird dabei der Hystereseabstand T_{H} um so größer gewählt, je geringer der positive Verdampfertemperaturgradient dTᵥ/dt während Betriebsphasen mit deaktiviertem Kompressor bzw. je betraglich größer der negative Verdampfertemperaturgradient dTᵥ/dt während Betriebsphasen mit aktiviertem Kompressor ist, d.h. je geringer die Abschalttemperatur Tₐᵤₛ ist. Die größere Abschalthysterese T_{H} im Fall niedrigerer Anlagenbelastung beugt einem unerwünscht frühen Wiederanschalten des Kompressors vor, was in Betriebsfällen mit höherer Anlagenbelastung wegen der langsamer abfallenden Verdampfertemperatur Tᵥ nicht stört, so daß dort ein früheres Wiedereinschalten des Kompressors ggf. vorteilhaft ist.

Wie die oben beschriebenen Ausführungsbeispiele zeigen, stellt die Erfindung somit eine echte Regelung für einen dynamischen Verdampfervereisungsschutz zur Verfügung, indem direkt die Verdampfertemperaturinformation zur dynamischen Anpassung wenigstens der Abschalttemperatur Tₐᵤₛ und ggf. auch der Anschalttemperatur Tₑᵢₙ genutzt wird, und zwar in Form des Verdampfertemperaturgradienten dTᵥ/dt, der ein zuverlässiges, eindeutiges und zudem vergleichsweise einfach zu ermittelndes Maß für die momentane Anlagenbelastung ist. Letztere ist ihrerseits dafür bestimmend, wie nahe die Abschalttemperatur Tₐᵤₛ an den Verdampfervereisungspunkt herangebracht werden kann, um einerseits das Leistungsvermögen der Klimaanlage möglichst voll zu nutzen und andererseits jegliche Verdampfervereisung zu verhindern. Da in den meisten Klimaanlagen ohnehin bereits ein Verdampfertemperatursensor vorhanden ist, ist kein erhöhter Hardware-Aufwand zur Realisierung der Erfindung notwendig. Es muß lediglich die Steuereinheit hardund/oder softwaremäßig auf die Durchführung dieses Verfahrens, d.h. die Bestimmung des Verdampfertemperaturgradienten dTᵥ/dt und die davon abhängige Ermittlung der Abschalttemperatur Tₐᵤₛ und ggf. der Anschalttemperatur Tₑᵢₙ ausgelegt werden. Dies kann, wie durch Fig. 1 repräsentiert, softwaretechnisch oder alternativ dazu durch Bereitstellung eines analogen dynamischen Vereisungsschutzreglers mit der betreffenden Funktionalität bewirkt werden.

## Patentansprüche

1. Verfahren zur verdampfervereisungsgeschützten Steuerung einer Klimaanlage mit einem Kältemittelkreislauf, der wenigstens einen Kompressor und einen Verdampfer umfaßt, bei dem
- laufend die Verdampfertemperatur (Tᵥ) erfaßt wird und
- der Kompressor deaktiviert wird, wenn die Verdampfertemperatur (Tᵥ) eine vorgegebene Abschalttemperatur (Tₐᵤₛ) unterschreitet, und der Kompressor wieder aktiviert wird, wenn die Verdampfertemperatur (Tᵥ) eine vorgegebene Anschalttemperatur (Tₑᵢₙ) überschreitet, die größer oder gleich der Abschalttemperatur (Tₐᵤₛ) ist,
**dadurch gekennzeichnet, daß**
- aus der laufenden Erfassung der Verdampfertemperatur (Tᵥ) der Verdampfertemperaturgradient (dTᵥ/dt) während Betriebsphasen mit deaktiviertem und/oder aktiviertem Kompressor ermittelt wird und
- die Abschalttemperatur (Tₐᵤₛ) in Abhängigkeit vom ermittelten Verdampfertemperaturgradient (dTᵥ/dt) variabel vorgegeben wird, wobei sie mit betraglich anwachsendem, negativem Verdampfertemperaturgradient während Betriebsphasen mit aktiviertem Kompressor und/oder mit sinkendem positivem Verdampfertemperaturgradient während Betriebsphasen mit deaktiviertem Kompressor ansteigend gewählt wird.

2. Verfahren nach Anspruch 1, weiter **dadurch gekennzeichnet, daß** der Hystereseabstand (T_{H}) der Anschalttemperatur (Tₑᵢₙ) von der Abschalttemperatur (Tₐᵤₛ) in Abhängigkeit vom ermittelten Verdampfertemperaturgradient (dTᵥ/dt) variabel vorgegeben wird, wobei er mit betraglich anwachsendem, negativem Verdampfertempraturgradient während Betriebsphasen mit aktivem Kompressor und/oder mit sinkendem positivem Verdampfertemperaturgradient während Betriebsphasen mit deaktiviertem Kompressor ansteigend gewählt wird.

3. Vorrichtung zur verdampfervereisungsgeschützten Steuerung einer Klimaanlage mit einem Kältemittelkreislauf, die wenigstens einen Kompressor und einen Verdampfer umfaßt, mit
- einem Verdampfertemperatursensor (2) und
- einer Steuereinheit (1), der die Verdampfertemperaturinformation (Tᵥ) vom Verdampfertemperatursensor zugeführt wird und die den Kompressor deaktiviert, wenn die Verdampfertemperatur eine vorgegebene Abschalttemperatur (Tₐᵤₛ) unterschreitet, und den Kompressor wieder aktiviert, wenn die Verdampfertemperatur eine Anschalttemperatur (Tₑᵢₙ) überschreitet, die größer oder gleich der Abschalttemperatur ist,
**dadurch gekennzeichnet, daß**
- die Steuereinheit (1) aus der laufend zugeführten Verdampfertemperaturinformation (Tᵥ) den Verdampfertemperaturgradient (dTᵥ/dt) während Betriebsphasen mit deaktiviertem und/oder aktiviertem Kompressor ermittelt und die Abschalttemperatur (Tₐᵤₛ) in Abhängigkeit vom ermittelten Verdampfertemperaturgradient variabel vorgibt, und zwar mit betraglich anwachsendem, negativem Verdampfertemperaturgradient während Betriebsphasen mit aktiviertem Kompressor und/oder mit sinkendem positivem Verdampfertemperaturgradient während Betriebsphasen mit deaktiviertem Kompressor ansteigend.

## Claims

1. Method for controlling an air-conditioner having a refrigerant circulation which includes at least one compressor and one evaporator to prevent freezing of the evaporator, comprising
- continuously monitoring an evaporator temperature (Tᵥ), and
- deactivating the compressor when the evaporator temperature (Tᵥ) falls below a preset switch-off temperature (Tₐᵤₛ), and reactivating the compressor when the evaporator temperature (Tᵥ) exceeds a preset switch-on temperature (Tₑᵢₙ) which is higher or the same as the switch-off temperature (Tₐᵤₛ),
**characterized in that**
- an evaporator temperature gradient (dTᵥ/dt) is evaluated from the continuous monitoring of the evaporator temperature (Tᵥ) during the operating phases with deactivated and/or activated compressor, and
- the switch-off temperature (Tₐᵤₛ) is preset variably as a function of the evaluated evaporator temperature gradient (dTᵥ/dt), the temperature being selected to be rising with increasing amount of negative evaporator temperature gradient during operating phases with activated compressor and/or with sinking positive evaporator temperature gradient during operating phases with deactivated compressor.

2. Method according to claim 1, further **characterized in that** the hysteresis distance (T_{H}) of the switch-on temperature (Tₑᵢₙ) to the switch-off temperature (Tₐᵤₛ) is preset variably as a function of the evaluated evaporator temperature gradient (dTᵥ/dt), the hysteresis distance being selected to be rising with increasing amount of negative evaporator temperature gradient during operating phases with activated compressor and/or with sinking positive evaporator temperature gradient during operating phases with deactivated compressor.

3. Apparatus for controlling an air-conditioner having a refrigerant circulation which includes at least one compressor and one evaporator to prevent freezing of the evaporator, having
- an evaporator temperature sensor (2), and
- a control unit (1) to which is supplied evaporator temperature information (Tᵥ) from the evaporator temperature sensor and for deactivating the compressor when the evaporator temperature falls below a preset switch-off temperature (Tₐᵤₛ), and reactivating the compressor when the evaporator temperature exceeds a preset switch-on temperature (Tₑᵢₙ) which is higher or the same as the switch-off temperature,
**characterized in that**
- the control unit (1) evaluates an evaporator temperature gradient (dTᵥ/dt) from the continuously supplied evaporator temperature information (Tᵥ) during operating phases with deactivated and/or activated compressor and presets variably the switch-off temperature (Tₐᵤₛ) as a function of the evaluated evaporator temperature gradient, and namely rising with increasing amount of negative evaporator temperature gradient during operating phases with activated compressor and/or with sinking positive evaporator temperature gradient during operating phases with deactivated compressor.

## Revendications

1. Procédé pour commander, d'une manière protégée contre le givrage d'un évaporateur, une installation de climatisation comportant un circuit pour un fluide de refroidissement, qui comprend au moins un compresseur et un évaporateur, selon lequel
- la température (Tᵥ) de l'évaporateur est détectée en permanence, et
- le compresseur est désactivé lorsque la température (Tᵥ) de l'évaporateur tombe au-dessous d'une température prédéterminée de débranchement (Tₐᵤₛ), et le compresseur est à nouveau activé lorsque la température (Tᵥ) de l'évaporateur dépasse une température prédéterminée de branchement (Tₑᵢₙ) qui est supérieure ou égale à la température de débranchement (Tₐᵤₛ),
**caractérisé en ce que**
- le gradient de température (dTᵥ/dt) de l'évaporateur est déterminé à partir de la détection permanente de la température (Tᵥ) de l'évaporateur, pendant des phases de fonctionnement dans lesquelles le compresseur est désactivé et/ou est activé; et
- la température de débranchement (Tₐᵤₛ) est prédéterminée d'une manière variable en fonction du gradient déterminé (dTᵥ/dt) de l'évaporateur, la température étant choisie de manière à augmenter avec un gradient de température négatif de l'évaporateur, qui augmente en valeur absolue, pendant des phases de fonctionnement, lors desquelles le compresseur est activé et/ou avec un gradient de température positif de l'évaporateur, qui diminue, pendant des phases de fonctionnement, lors desquelles le compresseur est désactivé.

2. Procédé selon la revendication 1, **caractérisé en ce que** la distance d'hystérésis (T_{H}) de la température de branchement (Tₑᵢₙ) par rapport à la température de débranchement (Tₐᵤₛ) est prédéterminée d'une manière variable en fonction du gradient de température déterminé (dTᵥ/dt) de l'évaporateur, cette distance d'hystérésis étant choisie de manière croissante avec un gradient de température négatif de l'évaporateur qui augmente en valeur absolue, pendant des phases de fonctionnement, lors desquelles le compresseur est activé, et/ou avec un gradient de température positif de l'évaporateur, qui diminue, pendant des phases de fonctionnement, lors desquelles le compresseur est désactivé.

3. Dispositif pour commander, d'une manière protégée contre un givrage d'un évaporateur, une installation de climatisation comportant un circuit pour le fluide de refroidissement, qui comprend au moins un compresseur et un évaporateur, et comportant :
- un capteur (2) de la température de l'évaporateur, et
- une unité de commande (1), à laquelle l'information (Tᵥ) de température de l'évaporateur est envoyée par le capteur de la température de l'évaporateu et qui désactivé le compresseur lorsque la température de l'évaporateur tombe au-dessous d'une température de débranchement prédéterminée (Tₐᵤₛ), et active à nouveau le compresseur lorsque la température d'évaporation dépasse une température de branchement (Tₑᵢₙ) qui est supérieure ou égale à la température de débranchement,
**caractérisé en ce que**
- l'unité de commande détermine le gradient de température (dTᵥ/dt) de l'évaporateur à partir de l'information de température (Tᵥ) de l'évaporateur envoyée en permanence pendant des phases de fonctionnement, pendant lesquelles le compresseur est désactivé et/ou est activé, et prédétermine de façon variable la température de débranchement (Tₐᵤₛ) en fonction du gradient déterminé de température de l'évaporateur, et ce de manière à augmenter la température alors que le gradient de température négatif de l'évaporateur augmente en valeur absolue, pendant des phases de fonctionnement, lors desquelles le compresseur est activé et/ou avec un gradient de température positif de l'évaporateur, qui diminue, pendant les phases de fonctionnement, lors desquelles le compresseur est désactivé.
